# EUROPÄISCHE PATENTSCHRIFT

(11) **EP 1 343 240 B1**
(45) Veröffentlichungstag und Bekanntmachung des Hinweises auf die Patenterteilung: **22.06.2011**
(21) Anmeldenummer: 03003631.3
(22) Anmeldetag: 18.02.2003
(51) Int. Cl.: H02G 3/18

(54) **Bustechnik-Installationssystem**
Installation system for the bus technical field
Système d' installation pour le domaine technique des bus

(30) Priorität: 05.03.2002 DE 10209657
(43) Veröffentlichungstag der Anmeldung: 10.09.2003
(73) Patentinhaber: ABB AG, 68309 Mannheim (DE)
(72) Erfinder: Schlicher, Thomas, Dipl.-Ing., 58515 Lüdenscheid (DE); Ulbrich, Stefan, Dipl.-Ing., 58579 Schalksmühle (DE); Harre, Björn, Dipl.-Ing., 58192 Bergkamen (DE); Wenzel, Uwe, Dipl.-Ing., 58515 Lüdenscheid (DE)

(56) Entgegenhaltungen:
- EP-A2- 0 402 654
- EP-A2- 0 772 132
- DE-U1- 9 214 324

## Beschreibung

Die Erfindung bezieht sich auf ein Bustechnik-lnstallationssystem. Die Erfindung kann beispielsweise in der Hausleittechnik verwendet werden.

In der über eine Bustechnik betriebenen Hausleittechnik ist es allgemein bekannt, Bedien-/Anzeigeelemente der Bustechnik in Unterputzdosen zu installieren, beispielsweise Bedienelemente zur Fernsteuerung elektrischer Geräte, wie Beleuchtung, Jalousien oder Anzeigeelemente zur Raumtemperaturanzeige und Bedienelemente zur Raumtemperatureinstellung. Die Installation derartiger Bedien-/Anzeigeelemente in Unterputzdosen ist deshalb vorteilhaft, weil dem Elektroinstallateur entsprechende erprobte Installationsgeräte zur Verfügung stehen und deshalb eine rationelle und kostensparende Installation sichergestellt ist. Dabei haben sich auf die Montage in einer einzigen Unterputzdose beschränkende Bedien-/Anzeigeelemente allerdings den Nachteil, daß vielfach eine zu kleine Bedien-/Anzeigefläche zur Verfügung steht. Größere Geräte können nicht in standardisierte Unterputzdosen eingebaut werden, so daß für den Elektroinstallateur ein hoher und damit kostenintensiver Installationsaufwand erforderlich ist.

Der Erfindung liegt die Aufgabe zugrunde, ein Bustechnik-lnstallationssystem anzugeben, das den Einsatz sich nicht auf eine einzige standardisierte Unterputzdose beschränkender Bedien-/Anzeigeelemente ermöglicht.

Diese Aufgabe wird erfindungsgemäß gelöst durch ein Bustechnik-lnstallationssystem, gebildet aus
- einem zur Montage in einer standardisierten Unterputzdose geeigneten Ankoppler für diverse Bussysteme mit Tragring, wobei Ankoppler und Tragring fest miteinander verbunden sind,
- einem Bedien-/Anzeigeelement, gebildet aus einem Bedien-/Anzeigeelement-Oberteil und mindestens einer zur Montage in einer standardisierten Unterputzdose geeigneten Bedien-/Anzeigeelement-Elektronikeinheit, wobei Bedien-/Anzeigeelement-Oberteil und Bedien-/Anzeigeelement-Elektronikein heit fest miteinander verbunden sind und
- mindestens einem losen Tragring.

Die mit der Erfindung erzielbaren Vorteile bestehen insbesondere darin, daß eine vergrößerte Bedien-/Anzeigefläche zur Verfügung steht, ohne daß dabei auf die bewährte und kostensparende Installationstechnik unter Verwendung standardisierter Unterputzdosen verzichtet werden muß. Insgesamt ergeben sich hierdurch Kostenvorteile im Vergleich mit einer Installation vergrößerter Geräte unter Verwendung vergrößerter, nicht standardisierter Unterputzdosen bzw. Unterputzgehäusen. Das Bedien-/Anzeigeelement kann auf verschiededen Ankopplern diverser Bussysteme installiert werden.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine schematische Darstellung eines installierten Bustechnik-lnstallationssystems,
- Fig. 2: die Komponenten des Bustechnik-Installationssystems,
- Fig. 3, 4: zwei Varianten.

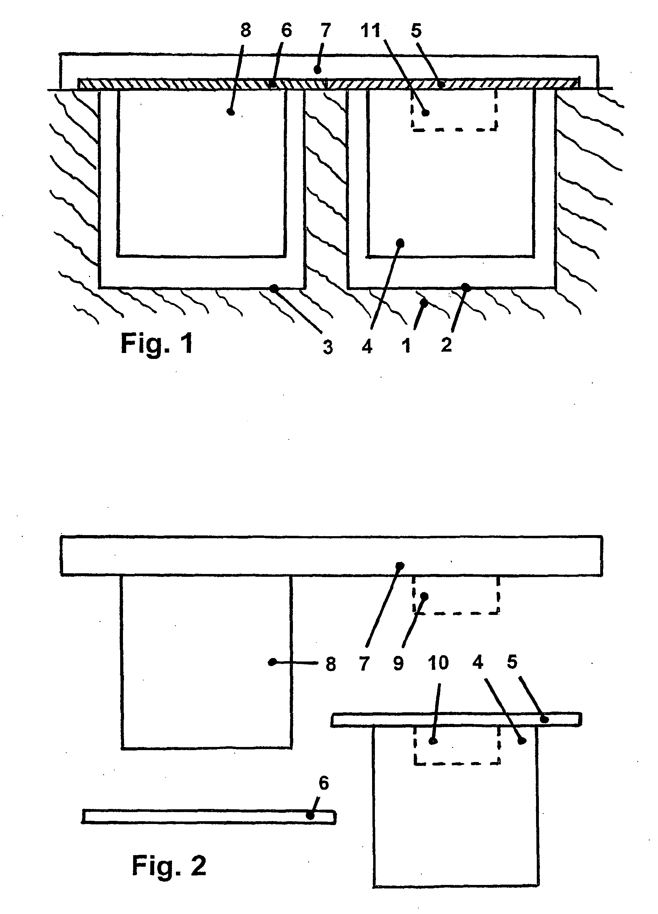

In Fig. 2 sind die Komponenten des Bustechnik-lnstallationssystems dargestellt. Wie zu erkennen ist, besteht das Bustechnik-lnstallationssystem aus
- einem zur Montage in einer standardisierten Unterputzdose geeigneten Ankoppler 4 für diverse Bussysteme mit Tragring 5, wobei Ankoppler 4 und Tragring 5 fest miteinander verbunden sind,
- einem Bedien-/Anzeigeelement 7/8, gebildet aus einem Bedien-/Anzeigeelement-Oberteil 7 - beispielsweise Display, Touch, Bedienelement, Raumtemperaturregler, Zugangskontrolle - und einer zur Montage in einer standardisierten Unterputzdose geeigneten Bedien-/Anzeigeelement-Elektronikeinheit 8, wobei Bedien-/Anzeigeelement-Oberteil 7 und Bedien-/Anzeigeelement-Elektronikeinheit 8 fest miteinander verbunden sind,
- einem losen (separaten) Tragring 6.

Die mechanische Verbindung zwischen Bedien-/Anzeigeelement-Oberteil 7 und den Tragringen 5, 6 erfolgt vorzugsweise über Schraubverbindungen, wozu die Tragringe 5, 6 mit geeigneten Gewindebohrungen versehen sind. Für die elektrische Kontaktierung zwischen Bedien-/Anzeigeelement-Oberteil 7 und Ankoppler 4 ist das Bedien-/Anzeigeelement-Oberteil 7 mit Steckkontakten 9 und der Ankoppler 4 mit hierzu korrespondierenden Steckbuchsen 10 versehen. Alternativ können andere elektrische Verbindungssysteme eingesetzt werden.

Fig. 1 zeigt eine schematische Darstellung eines installierten Bustechnik-lnstallationssystems. Es ist eine Wand 1 mit mindestens zwei nebeneinander installierten standardisierten Unterputzdosen 2, 3 zu erkennen. In einem ersten Schritt wird zunächst der Ankoppler 4 mittels seines Tragringes 5 (mittels seiner Spreizkrallen) in der Unterputzdose 2 montiert. In einem zweiten Schritt erfolgt die Montage des losen Tragringes 6 (mittels seiner Spreizkrallen) in der Unterputzdose 3. In einem dritten Schritt wird die Bedien-/Anzeigeelement-Elektronikeinheit 8 in die Unterputzdose 3 eingebracht und das Bedien-/Anzeigeelement-Oberteil 7 wird bündig zur Wand 1 ausgerichtet, wobei gleichzeitig das elektrische Verbindungssystem 11 zwischen Bedien-/Anzeigelement-Oberteil 7 und Ankoppler 4 kontaktiert wird.

In einem vierten Schritt erfolgt die Verschraubung des Bedien-/Anzeigeelement-Oberteils 7 mit dem Tragring 6. Desgleichen wird das Bedien-/Anzeigeelement-Oberteil 7 mit dem Tragring 5 verschraubt.

Beim vorstehend erläuterten installierten Bustechnik-Installationssystems wird ein Bedien-/Anzeigeelement 7/8 mit einem sich über zwei nebeneinander montierte Unterputzdosen erstreckenden Bedien-/Anzeigeelement-Oberteil 7 verwendet, welches mit einer einzigen Bedien-/Anzeigeelement-Elektronikeinheit und allen gewünschten Bedienelementen und Anzeigeelementen versehen ist. Reicht die zur Verfügung stehende Fläche nicht aus, so ist es in Abwandlung hierzu auch möglich, ein vergrößertes Bedien-/Anzeigeelement mit einem Bedien-/Anzeigeelement-Oberteil einzusetzen, welches sich über drei, vier oder mehr benachbart (beispielsweise in einer Reihe) montierte Unterputzdosen erstreckt und mit mindestens einer Bedien-/Anzeigeelement-Elektronikeinheit fest verbunden ist.

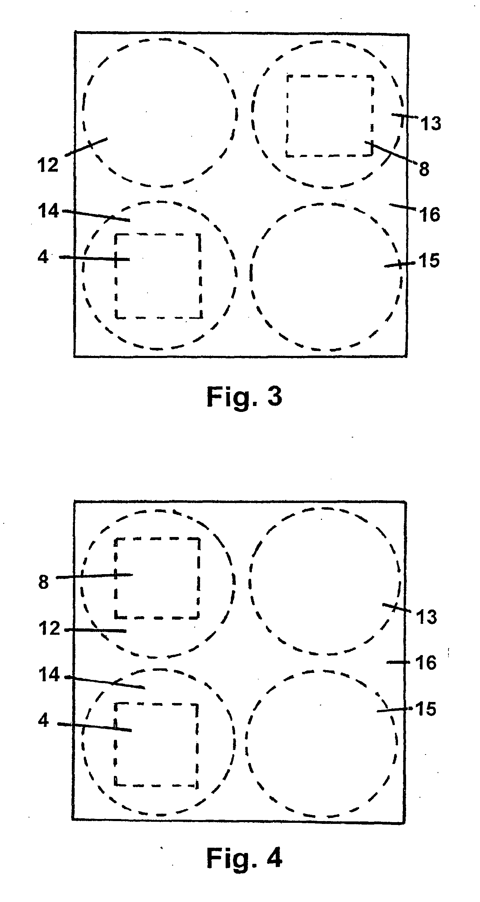

In den Fig. 3 und 4 ist eine Sicht auf ein sich über vier Unterputzdosen erstreckendes, quadratisch ausgebildetes Bedien-/Anzeigeelement-Oberteil 16 dargestellt. In beiden Varianten sind vier Unterputzdosen 12, 13, 14, 15 in quadratischer Konfiguration vorgesehen, wobei in beiden Figuren ein Ankoppler 4 in der Unterputzdose 14 montiert ist. Bei der Variante gemäß Fig. 3 befindet sich eine Bedien-/Anzeigeelement-Elektronikeinheit 8 in der diagonal zur Unterputzdose 14 angeordneten Unterputzdose 13. Bei der Variante gemäß Fig. 4 befindet sich eine Bedien-/Anzeigeelement-Elektronikeinheit 8 in der in einer Reihe neben der Unterputzdose 14 angeordneten Unterputzdose 12. Bei der Variante gemäß Fig. 3 dienen die weiteren Unterputzdosen 12, 15 zur zusätzlichen Befestigung des Bedien-/Anzeigeelement-Oberteils 16. Bei der Variante gemäß Fig. 4 dienen die weiteren Unterputzdosen 13, 15 zur zusätzlichen Befestigung des Bedien-/Anzeigeelement-Oberteils 16. Auf diese Art und Weise ist bei beiden Varianten sichergestellt, daß das Bedien-/Anzeigeelement-Oberteils 16 an all seinen vier Ecken, d. h. an allen vier Unterputzdosen befestigt werden kann, was für eine wandbündige Montage vorteilhaft ist. Für die Befestigung können wiederum zunächst lose Tragringe mittels ihrer Spreizkrallen in den weiteren Unterputzdosen montiert werden, worauf eine Verschraubung des Bedien-/Anzeigeelemente-Oberteils 16 mit allen Tragringen erfolgt.

Darüber hinaus ist es möglich, in den weiteren Unterputzdosen 12, 15 gemäß Fig. 3 und 13, 15 gemäß Fig. 4 weitere elektronische oder sonstige Einheiten zu installieren.

## Patentansprüche

1. Bustechnik-Installationssystem gebildet aus
• einem zur Montage in einer standardisierten Unterputzdose geeigneten Ankoppler (4) für diverse Bussysteme mit Tragring (5), wobei Ankoppler (4) und Tragring (5) fest miteinander verbunden sind,
• einem Bedien-/Anzeigeelement (7/8), gebildet aus einem Bedien-/Anzeigeelement-Oberteil (7) und mindestens einer zur Montage in einer standardisierten Unterputzdose geeigneten Bedien-/Anzeigeelement-Elektronikeinheit (8), wobei Bedien-/Anzeigeelement-Oberteil (7) und Bedien-/Anzeigeelement-Elektronikeinheit (8) fest miteinander verbunden sind und
• mindestens einem losen Tragring (6).

2. Bustechnik-Installationssystem nach Anspruch 1, **dadurch gekennzeichnet, daß** die elektrische Verbindung zwischen Bedien-/Anzeigeelement-Oberteil (7) und Ankoppler (4) über Steckkontakte (8) und Steckbuchsen (10) erfolgt.

## Claims

1. An installation system for bus technology, formed by
- a coupler (4) for fitting in a standardized flush-mounted socket for various bus systems with a bearer ring (5), with the coupler (4) and the bearer ring (5) being tightly connected with each other;
- an operating/display element (7/8), formed by an upper part (7) of an operating/display element and at least one electronic unit (8) of a display/operating element which is suitable for mounting in a standardized flush-mounted socket, with the upper part (7) of the operating/display element and the electronic unit (8) of the operating/display element being tightly connected with each other, and
- at least one loose bearer ring (6).

2. An installation system for bus technology according to claim 1, **characterized in that** the electrical connection between the upper part (7) of the operating/display element and the coupler (4) occurs via plug contacts (8) and contact sockets (10).

## Revendications

1. Système d'installation avec bus, formé de :
• un coupleur (4) convenant pour le montage dans une boîte sous enduit normalisée pour divers systèmes de bus avec anneau de retenue (5), le coupleur (4) et l'anneau de retenue (5) étant assemblés l'un à l'autre à demeure ;
• un élément de commande et d'affichage (7/8) formé d'une partie supérieure d'élément de commande et d'affichage (7) et d'au moins une unité électronique d'élément de commande et d'affichage (8) convenant pour un montage dans une boîte sous enduit normalisée, la partie supérieure d'élément de commande et d'affichage (7) et l'unité électronique d'élément de commande et d'affichage (8) étant assemblées l'une à l'autre à demeure ; et
• au moins un anneau de retenue libre (6).

2. Système d'installation avec bus selon la revendication 1, **caractérisé en ce que** la connexion électrique entre la partie supérieure d'élément de commande et d'affichage (7) et le coupleur (4) est réalisée à l'aide de contacts enfichables (8) et de prises d'enfichage (10).
